Europäisches Patentamt

European Patent Office

Office européen des brevets

(11) Veröffentlichungsnummer: **0 180 849**
**A1**

## (12) EUROPÄISCHE PATENTANMELDUNG

(21) Anmeldenummer: 85113432.0

(22) Anmeldetag: 23.10.85

(51) Int. Cl.⁴: **A 47 J 37/07**

(30) Priorität: 02.11.84 DE 3440079

(43) Veröffentlichungstag der Anmeldung:
14.05.86 Patentblatt 86/20

(84) Benannte Vertragsstaaten:
AT BE CH FR GB IT LI LU NL SE

(71) Anmelder: Gehrke, Peter
Ginsterweg 31
D-7742 St. Georgen/Brigach(DE)

(72) Erfinder: Gehrke, Peter
Ginsterweg 31
D-7742 St. Georgen/Brigach(DE)

(74) Vertreter: Neymeyer, Franz, Dipl.-Ing. (FH)
Haselweg 20
D-7730 Villingen 24(DE)

(54) Transportable Grillvorrichtung.

(57) Die transportable Grillvorrichtung besteht aus einem Feuerkasten (1), der eine sechseckige Grundrißform und sechs Seitenwände (3 bis 8) gleicher Höhe aus Stahlblech aufweist und der mit wenigstens drei abnehmbaren Standbeinen (13), einem höhenverstellbaren Grillrost (51) und einem um eine vertikale Achse schwenkbaren Topfhalter versehen ist. In den Ecken der Seitenwände (3 bis 8) sind jeweils nach innen gebogene Ösenbleche (9) angeordnet, welche mit den Eckabschnitten der Seitenwände (3 bis 8) oben und unten offene Steckösen (10) mit einem rhombischen Querschnitt bilden. In diesen Steckösen (10) sind von der Unterseite des Feuerkastens (1) formschlüssig rhombische Steckzapfen der Standbeine (13) und von oben entweder Steckzapfen von Windschutzwänden oder weitere Standbeine (13) zur Bildung einer galgenartigen Kessel- oder Rostaufhängevorrichtung, oder Topfhalter einsteckbar sind. Die Standbeine (13) bestehen jeweils aus geraden Metallrohren, die am einen Ende einen um 30° gebogenen Steckzapfen mit rhombischem Querschnitt aufweisen. Die aufsteckbaren Windschutzwände sind scharnierartig miteinander verbunden, wobei ihre Scharnierdorne zugleich Steckzapfen bilden.

FIG. 1

**Dipl.-Ing. (FH)**
**Franz Neymeyer**
**Patentanwalt**
**Haselweg 20**
**7730 Villingen 24**

0180849

G 136/EP

Anmelder: Peter Gehrke, D-7742 St. Georgen-Brigach
Bundesrepublik Deutschland

Transportable Grillvorrichtung

Die Erfindung betrifft eine transportable Grillvorrichtung, bestehend aus einem eine sechseckige Grundrißform und sechs Seitenwände gleicher Höhe aufweisenden Feuerkasten aus Stahlblech mit wenigstens drei abnehmbaren Standbeinen, mit abnehmbaren Windschutzwänden, mit einem Grillrost, der höhenverstellbar über dem Boden des Feuerkastens in eine Halteeinrichtung einhängbar ist, sowie mit wenigstens einem in den Feuerkasten einsetzbaren Glutkorb und mit wenigstens einem um eine vertikale Achse schwenkbaren und abnehmbaren Topfhalter.

Bei einer bekannten Grillvorrichtung (DE-OS 24 15 575) ist ein rechteckiger Feuerkasten vorgesehen, dessen Boden von einer Vielzahl parallel zueinander verlaufender Roststäbe gebildet wird. Dieser Feuerkasten ist in einen ebenfalls rechteckigen Aschenkasten einsetzbar, der wenigstens zwei sich gegenüberliegen-

- 2 -

de, hochstehende Strahlschutzwände aufweist. Diese Strahlschutzwände sind an ihren Oberkanten jeweils mit kerbenartigen Vertiefungen versehen, in welche jeweils Haltegriffe des Feuerkastens einhängbar sind. Über dem Feuerkasten ist in verschiedenen Höhenlagen ein Grillrost anbringbar. Außerdem ist auf der Außenseite einer längsseitigen Wand des Feuerkastens ein vertikal verlaufendes Rohrstück angebracht, das zur Aufnahme des vertikalen Stabes eines mit einer horizontalen Ringschleife versehenen Topfhalters dient, der ebenfalls höhenverstellbar ist.

Des weiteren ist eine Grillvorrichtung bekannt (DE-OS 26 12 230), bei der der Feuerkasten eine sechseckige Form aufweist, in der sich ein Feuerrost befindet. Der Feuerkasten ist mit drei Füßen versehen, die als dreieckige Blechteile ausgebildet sind. Auf die Oberkante des Feuerkastens ist ein rechteckiger Grillrost auflegbar, der länger und schmäler ist als die Sechseckform des Feuerkastens. Auf die Oberkante des Feuerkastens ist zudem ein kaminartiger Rauchabzug aufsetzbar, der wie der Feuerkasten aus nichtrostendem Stahlblech besteht. Dieser Rauchabzug besitzt insgesamt sechs Füße, die auf dem Rand des Feuerkastens lose aufsitzen. Zwischen diesen Füßen sind abklappbare Windschutzwände in Form von Platten vorgesehen, die in ihrer abgeklappten Horizontallage als Ablagetische verwendet werden können.

Diese Vorrichtung soll sowohl als Grillgerät wie auch als Kamin verwendbar und zu diesem Zweck an beliebigen Orten im
Freien aufstellbar sein. Als Feuerstelle zur Erzeugung von
Strahlungswärme für darum herumsitzende Personen mag diese
Vorrichtung gut geeignet sein. Als Grillgerät ist sie jedoch
nur in beschränktem Umfange geeignet, weil der Grillrost nicht
höhenverstellbar ist, weil bei abgenommenem Rauchabzug keine
Windschutzwände vorhanden sind und weil schließlich auch
keine Möglichkeit besteht, einen Grillspieß über dem Feuerrost
anzuordnen.

Bei der erstgenannten Grillvorrichtung besitzt der Aschenkasten
keine Standbeine, und es besteht keine Möglichkeit, am Aschenkasten oder am Feuerkasten seitliche Windschutzwände anzubringen. Auch eine Einhängevorrichtung für einen Grillspieß ist
nicht vorgesehen.


Der Erfindung liegt die Aufgabe zugrunde, eine transportable
Grillvorrichtung der gattungsgemäßen Art zu schaffen, die aus
wenigen handlichen, an sich separaten, jedoch leicht in unterschiedlichen Kombinationen zu jeweils stabilen Aufbauten zusammenfügbaren Einzelteilen besteht, die zudem einfach herstellbar und ohne Zuhilfenahme von Werkzeugen oder Schrauben
stabil miteinander verbindbar sein sollen, wobei auf Grund
der unterschiedlichen Kombinationsmöglichkeiten der Einzelteile die jeweils optimalen Betriebseigenschaften zum Grillen auf
dem Grillrost, Grillen am Spieß, Garen, Braten oder Kochen
in Töpfen, Pfannen oder in einem Kessel erzielbar sein sollen.

Gelöst wird diese Aufgabe bei einer transportablen Grillvorrichtung der eingangs genannten Art dadurch, daß in den Ecken der Seitenwände des Feuerkastens jeweils nach innen gebogene Ösenbleche angeordnet sind, welche mit den Eckabschnitten der Seitenwände oben und unten offene, im Boden des Feuerkastens frei gesparte Stecksen mit einem wenigstens annähernd rhombischen Querschnitt bilden, in welche von der Unterseite des Feuerkastens formschlüssig rhombische Steckzapfen der Standbeine und in welche von oben entweder Steckzapfen von Windschutzwänden oder weitere Standbeine zur Bildung einer galgenartigen Kessel- oder Rostaufhängevorrichtung oder Topfhalter einsteckbar sind.

Durch diese erfindungsgemäße Ausgestaltung wird nicht nur die für eine gefahrlose Benutzung erforderliche hohe Standfestigkeit sondern auch mit einfachen und leicht zu handhabenden Mitteln eine hohe Variabilität bezüglich der Aufbaumöglichkeiten der Grillvorrichtung erreicht, welche erheblich dazu beitragen, daß die Grillvorrichtung der jeweiligen Nutzungsart entsprechend optimal aufgebaut werden kann.

Durch die Ausgestaltung der Standbeine gem. Anspruch 2 wird nicht nur eine formschlüssige Verdrehsicherung der Standbeine in den Ösen des Feuerkastens, sondern auch eine vergrößerte Standfläche erreicht. Beides trägt erheblich zur Erhöhung der Standfestigkeit bei.

0180849

Durch die Ausgestaltung der Standbeine gem. Anspruch 3 ergibt sich die vorteilhafte Möglichkeit, die Standbeine so an der Unterseite des Feuerkastens anzubringen, daß sie nicht schräg nach außen sondern schräg zur Mitte des Feuerkastens hin nach unten ragen, so daß die unteren vertikalen Abschnitte der Standbeine beispielsweise in entsprechend angeordnete Stecklöcher oder Steckrohre eines Betonssockels gesteckt werden können, der im Erdreich festsitzend angeordnet ist. Auch hierbei ist eine sehr gute Standfestigkeit gewährleistet. Die Benutzung der Grillvorrichtung ist insofern verbessert, als keine seitlich nach außen vorstehenden Standbeine vorhanden sind, die beim Herantreten an den Feuerkasten oder beim Umlaufen des Feuerkastens störend sein könnten.

Auch bezüglich der Bildung einer galgenartigen Aufhängevorrichtung gem. Anspruch 1 ist diese Ausgestaltung vorteilhaft, weil die abgewinkelten Fußabschnitte, die bei dieser Verwendungsart der Standbeine lotrecht nach oben ragen, besser zur Befestigung einer Tragplatte od. dgl. geeignet sind, als schräge Standbeinenden.

Durch die Ausgestaltung der Grillvorrichtung nach Anspruch 4 ist nicht nur der Vorteil gegeben, daß die Windschutzwände, wenn sie nicht benötigt werden, auf Grund ihrer scharnierartigen Verbindungen oder jeweils lose raumsparend zusammengefaltet werden können, sondern sie lassen sich auch auf einfache Weise auf den Seitenwänden des Feuerkastens aufsetzen. Dabei besteht die Möglichkeit, eine ringsum geschlossene oder teilweise geöffnete Ringwand zu bilden, durch deren seitliche Öffnung der Feuerkasten bzw. der darüber angeordnete Grillrost leicht zugänglich ist, wobei jedoch das Innere des Feuerkastens gegen unerwünschten Windeinfall weitgehend geschützt sein kann.

Mit Hilfe der Ausgestaltung gem. Anspruch 5 kann die Einstecktiefe der Steckzapfen sowohl der Standbeine als auch der Windschutzwände und ebenso von Topfhaltern auf einfache Weise festgelegt werden. Außerdem ist es in Verbindung mit der Ausgestaltung gem. Anspruch 6 möglich, eine Verdrehsicherung runder Steckzapfen in den Stecksösen zu realisieren, was insbesondere dann von Interesse ist, wenn beispielsweise der Topfring eines Topfhalters statt mit einem Topf mit einer Tischplatte versehen ist und diese festsitzend in einer Stecköse befestigt sein soll.

Durch die Ausgestaltung der Erfindung gem. Anspruch 7 ist eine optimale Wärmestrahlung der Glutkörbe in Richtung auf das Grillgut, das in diesem Falle vorzugsweise auf einem Grillspieß angeordnet ist, erreichbar. Durch die freie Aufstellbarkeit der Glutkörbe lassen sich deren Abstände vom Grillgut den jeweils gewünschten Hitzeeinwirkungen anpassen.

Mit Hilfe des nach Anspruch 8 vorgesehenen Deckels ist es möglich, den von den Windschutzwänden umgebenen Raum nach oben zu schließen und somit die Wärmeabwanderung nach oben erheblich zu reduzieren. Man kann dabei nicht nur eine Verzögerung einer Abkühlung des Innenraumes, sondern auch eine
Erhöhung der Innenraumtemperatur erzielen, was beispielseise
zum Garen oder bei niedrigeren Temperaturen zum Warmhalten
von Speisen sehr vorteilhaft ist. Außerdem läßt sich dieser
Deckel auch zum Abdecken des Feuerkastens benutzen, wenn
dieser nicht in Betrieb ist.

Eine weitere vorteilhafte Ausgestaltung der Erfindung ist Gegenstand der Ansprüche 9 und 10, wobei die vorzugsweise dreifach
vorhandenen Glutbegrenzer nicht nur zu einem sparsamen Verbrauch an Holzkohle beitragen, in dem sie die aufgelegte Holzkohle jeweils in dem gewünschten Glutbereich zusammenhalten
und für eine gleichmäßig gute Verbrennung sorgen, sondern
auch dadurch, daß die Möglichkeit besteht, zwei Schenkel zweier
solcher Glutbegrenzer parallel zueinander verlaufend in geringem Abstand voneinander aufzustellen, damit sie eine Art Krippe zum Einlegen einer zunächst geringen Menge von Holzkohle
bilden, die vom Boden des Feuerkastens einen gewissen vertikalen Abstand hat. Auf diese Weise läßt sich Holzkohle sehr
leicht entzünden, weil eine ausreichende Sauerstoffzufuhr insbesondere von unten her gewährleistet ist und dabei eine gewisse Kaminwirkung entsteht.

Um eine möglichst einfach zu gestaltende und einfach zu handhabende höhenverstellbare Tragvorrichtung für den Grillrost über dem Feuerkasten zu erhalten ist die Ausgestaltung nach
Anspruch 11 vorgesehen.

Anhand der Zeichnung wird nun im folgenden die Erfindung
näher erläutert. Es zeigt:

Fig. 1   einen mit Standbeinen und einem eingelegten Grillrost
         versehenen Feuerkasten in perspektivischer Seitenansicht;

Fig. 2   den mit einer galgenartigen Aufhängevorrichtung versehenen Feuerkasten der Fig. 1 in perspektivischer
         Darstellung;

Fig. 3   den Feuerkasten der Fig. 1 mit einer anderen Standbeinanordnung und mit mehreren Topfhaltern in perspektivischer Seitenansicht;

Fig. 4   den Feuerkasten der Fig. 1 mit mehreren aufgesetzten
         Windschutzwänden und einer höhenverstellbaren Haltevorrichtung für den Grillrost;

Fig. 5   den Feuerkasten der Fig. 1 mit sechs einen geschlossenen Mantel ergebenden Windschutzwänden und zwei
         in den Feuerkasten aufrecht stehend eingesetzten Glutkörben;

Fig. 6   den Feuerkasten der Fig. 1 mit zwei übereinander gesetzten Windschutzwandmänteln und einem Deckel;

Fig. 7   den Feuerkasten der Fig. 1 mit eingesetztem Rost und
         vier aufgesetzten Windschutzwänden, auf denen ein
         Deckel angeordnet ist;

Fig. 8   einen Glutkorb als Einzelteil in perspektivischer Ansicht;

Fig. 9   die scharnierartige Verbindung zweier Windschutzwände im Schnitt;

Fig. 10 einen Vertikalschnitt durch eine Stecköse des Feuerkastens mit von unten eingesetztem Standbein und von oben eingesetztem Topfhalter;

Fig. 11 einen Schnitt XI-XI aus Fig. 10;

Fig. 12 einen Betonsockel mit einem Steckrohr für ein Standbein im Schnitt;

Fig. 13 ein Standbein als Einzelteil in Seitenansicht;

Fig. 14 einen Schnitt XIV-XIV aus Fig. 13 in vergrößertem Maßstab;

Fig. 15 drei in Sechseckformation angeordnete Glutbegrenzer in der Draufsicht;

Fig. 16 eine andere Anordnung zweier Glutbegrenzer in perspektivischer Draufsicht;

Fig. 17 einen Schnitt XVII-XVII aus Fig. 16.


Die in der Zeichnung dargestellte Grillvorrichtung weist als Grundelement einen sechseckigen Feuerkasten 1 auf, der aus einem horizontalen Boden 2 und aus sechs vertikalen, gleichhohen Seitenwänden 3, 4, 5, 6, 7 und 8 besteht, die jeweils paarweise unter einem Winkel von 120° zusammenstoßen. In den Ecken der Seitenwände 3 bis 8 sind jeweils nach innen gebogene Ösenbleche 9 angeschweißt, die sich über die gesamte Höhe der Seitenwände 3 bis 8 erstrecken und welche mit den Endabschnitten der Seitenwände 3 bis 8 oben und unten offene Stecksen 10 bilden, deren Querschnitt, wie am besten aus Fig. 11 erkennbar ist, eine im wesentlichen rhombische Form aufweisen, wobei jeweils die auf der Diagonalen 11 liegenden Ecken mit dem Radius des passenden Innenkreises abgerundet sein können. Es ist aus Fig. 11 auch erkennbar, daß die Querschnittsform der Steckösen 10 in bezug auf die Diagonale 11 symmetrisch ist und daß demnach die Längsachse 12 der rhombischen Querschnittsform rechtwinklig zur Diagonalen 11 verläuft. Im Boden 2, der mit einer beliebigen Anzahl von Belüftungslöchern 2' versehen sein kann, sind im Bereich der Steckösen 10 jeweils Aussparungen vorgesehen, die jedoch in der Zeichnung nicht sichtbar sind. Um den Feuerkasten 1 in einer bedienungsmäßig geeigneten Höhe zu positionieren, ist er mit drei Standbeinen 13 versehen, die jeweils die gleiche Form aufweisen und die in den sich nicht diametral gegenüberliegenden Steckösen 10 des Feuerkastens 1 von unten befestigt sind.

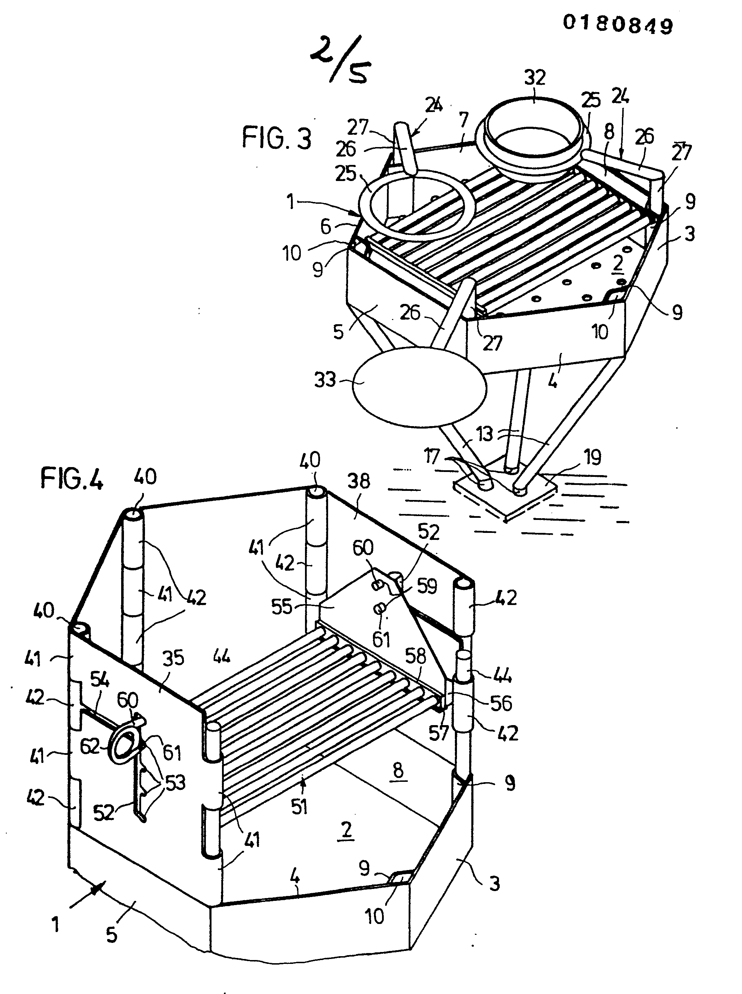

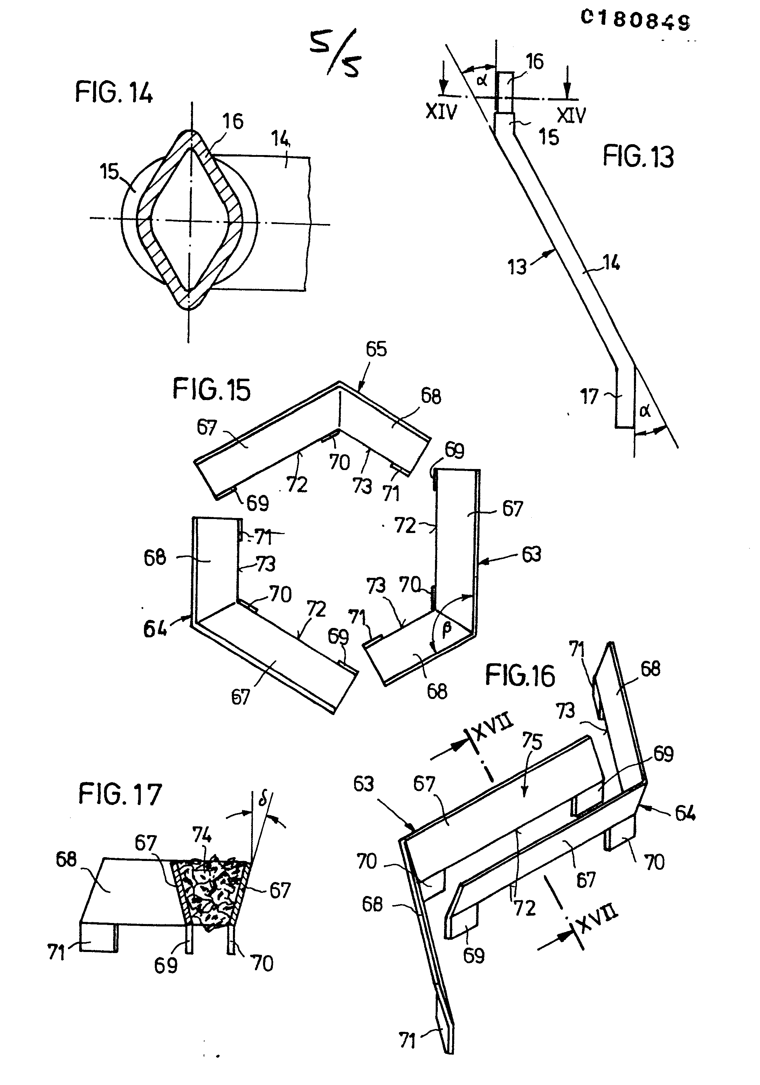

Wie aus den Fig. 13 und 14 erkennbar ist, bestehen diese Standbeine 13 jeweils aus einem geraden Rohrkörper 14, der an seinem oberen Ende einen um einen Winkel $\alpha$ von c. 30° abgewinkelten Abschnitt 15 mit einem Steckzapfen 16 aufweist, der die aus Fig. 4 ersichtliche, dem Querschnitt der Stecköse 10 angepaßte, rhombische Querschnittsform aufweist und der somit formschlüssig in jede der Steckösen 10 von oben oder unten einsteckbar ist. Durch die dabei entstehende formschlüssige Verbindung wird sichergestellt, daß sich die Standbeine 13 in den Steckösen 10 nicht verdrehen können. Bei sorgfältiger Fertigung ist es auch möglich, diese Steckverbindung spielfrei zu gestalten, so daß eine gute Standfestigkeit und hohe Stabilität erreicht werden kann. Am unteren Ende weist der Rohrkörper 14 einen um den gleichen Winkel $\alpha$ von ca. 30° abgewinkelten Fußabschnitt 17 auf, der achsparallel zu dem Steckzapfen 16 verläuft. Mit Hilfe dieser Fußabschnitte 17 wird nicht nur sichergestellt, daß die Standbeine 13 jeweils mit der unteren Stirnfläche eben auf der jeweils gegebenen Unterlage aufsitzen, sondern es ist auch die Möglichkeit geschaffen, die Standbeine 13 in der in Fig. 3 dargestellten Weise am Feuerkasten 1 zu befestigen, bei der die schrägen Mittelabschnitte der Standbeine 13 nicht nach außen, sondern zur Mitte hin nach unten ragen und die Fußabschnitte 17 in Steckrohre 18 eines Betonsockels 19 gesteckt sind. Auch hierbei ist eine möglichst geringe. radiale Spielfreiheit zwischen dem Fußabschnitt 17 des Standbeines 13 und dem Steckrohr 18 für die gute Standfestigkeit und Lagestabilität von Bedeutung. Diese Art der Anordnung der Standbeine 13 hat den Vorteil, daß diese beim Herantreten an den Feuerkasten 1nicht stören und daß auch die Gefahr des Darüberstolperns nicht gegeben ist.

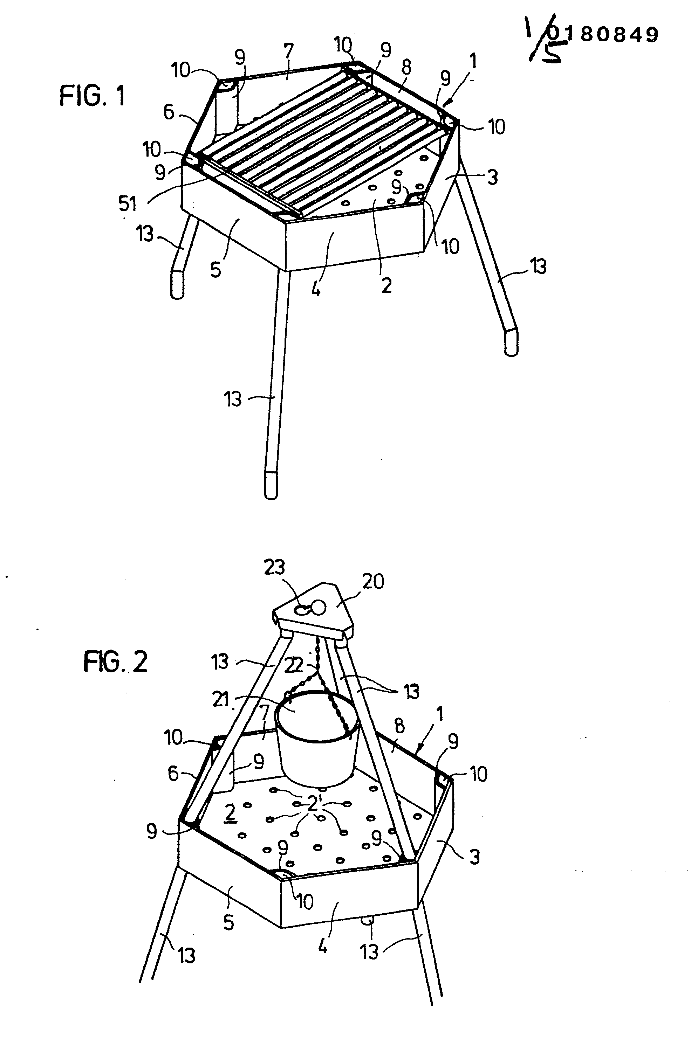

Wie aus Fig. 2 ersichtlich ist, können zusätzlich zu den drei von unten in die Steckösen 10 eingesetzten Standbeine 13 noch drei weitere Standbeine 13 in quasi spiegelbildlicher Anordnung von oben in die Steckösen 10 eingesetzt werden, wobei in diesem Falle die Steckzapfen 16 nach unten ragen und die Fußabschnitte 17 nach oben. Auf diese Weise bilden sie zusammen mit einer

0180849

auf die Fußabschnitte 17 aufgesetzten Verbindungsplatte 20 eine galgenartige Aufhängevorrichtung für einen Kochkessel 21, der mittels einer Kette 22 in einer Schlitzöse 23 der Verbindungsplatte hängend und höhenverstellbar befestigt werden kann. Statt des Kochkessels 21 kann auch beispielsweise ein Hängerost an dieser Aufhängevorrichtung 13/20 aufgehängt werden. Wie schon aus Fig. 2 erkennbar ist, läßt sich diese Aufhängevorrichtung, die aus drei weiteren Standbeinen 13 und der Abdeckplatte 20 besteht, sehr einfach errichten, in dem die drei Standbeine in der dargestellten Weise in die Steckösen 10 gesteckt und mit der die oberen Enden verbindenden Verbindungsplatte 20 verbunden werden. Entsprechend einfach geschieht auch das Abbauen dieser Aufhängevorrichtung.

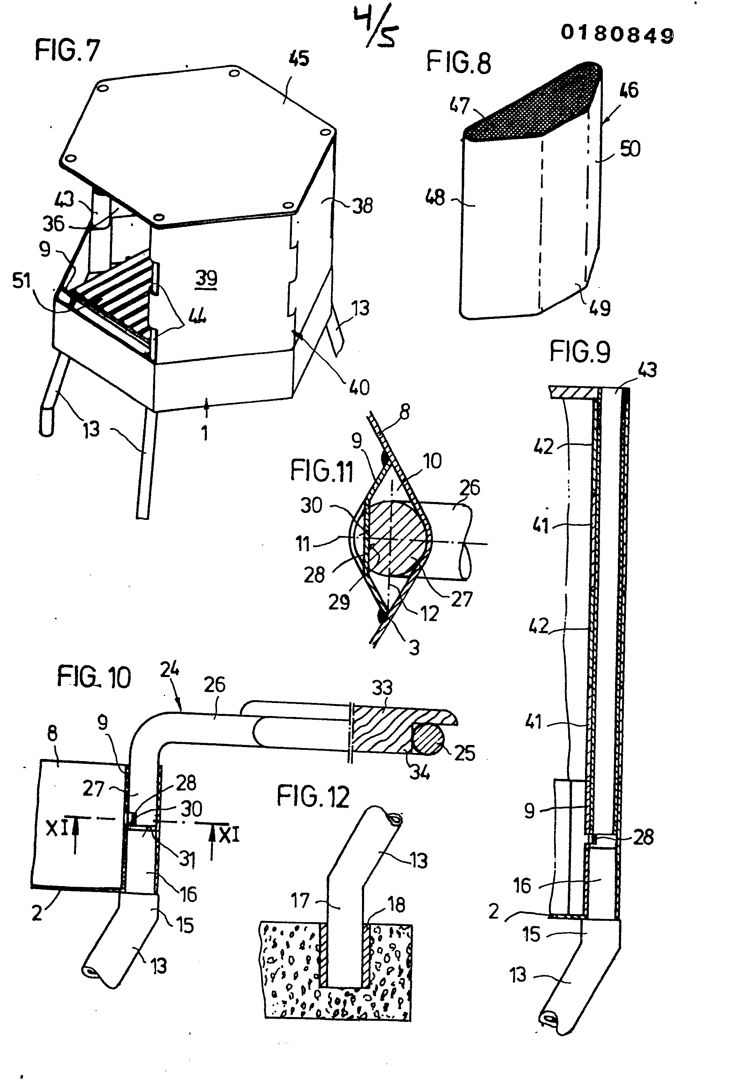

Wie aus den Fig. 3 und 10 ersichtlich ist, besteht auch die Möglichkeit, in den oben offenen Einsteckösen 10 Topfhalter 24 zu befestigen. Diese Topfhalter 24 bestehen jeweils aus einem Topfring 25, der an einem horizontalen Tragarm 26 befestigt ist, welcher einen rechtwinklig abgebogenen, in Gebrauchslage vertikalen Steckzapfen 27 aufweist. Der Topfring 25 und der Tragarm 26 mit dem Steckzapfen 27 bestehen zweckmäßigerweise aus Rundmaterial, z.B. aus einem Rundstab oder aus einem Rohr, dessen Durchmesser dem Durchmesser des Innenkreises des rhombischen Querschnittprofiles der Stecköse 10 entspricht. Um einerseits die Einstecktiefe solcher zylindrischer Steckzapfen 27 in der Stecköse 10 zu begrenzen und zugleich eine Möglichkeit zu schaffen, auch solche Steckzapfen in den Steckösen
10 drehsicher zu fixieren, sind die Ösenbleche 9, wie am besten aus den Fig. 10 und 11 ersichtlich ist, im Bereich ihrer
halben Höhe jeweils mit angeschnittenen, sickenartig in den
Ösenquerschnitt einwärts geprägten, parallel zur Längsachse
12 des rhombischen Ösenquerschnitts verlaufenden Stützabschnitten 28 versehen. Diese Stützabschnitte 28 bilden somit in bezug auf den Innenkreis des rhombischen Ösenquerschnittes eine
sehnenartig verlaufende, querschnittsverringernde Anlagefläche
29, die für einen an sich kreisrunden Steckzapfen als Verdrehsicherung dienen kann, wenn dieser, wie in den Fig. 10 und
11 dargestellt ist, eine entsprechende Abflachung 30 aufweist.
Zweckmäßigerweise ist diese Abflachung 30 so angeordnet, daß
sie dem Tragarm 26 diametral gegenüberliegt. Auf diese Weise
ist es möglich, den bzw. die Topfhalter 24 in der Diagonallage
drehsicher in den Ösen 10 zu fixieren, während sie um die
Höhe der Abflachung 30 hochgehoben mit der unteren Stirnfläche
31 des Steckzapfens 27 auf dem Stützabschnitt 28 aufsitzend
beliebig drehbar sind.

Aus Fig. 10 ist des weiteren erkennbar, daß in den Topfring
25 des Topfhalters 24 statt eines Topfes 32 beispielsweise eine
runde Tischplatte 33 mit einem zylindrischen Ansatz 34 eingesetzt werden kann. Statt des Topfringes 25 kann auch ein Stellkreuz
od. dgl. vorgesehen sein.


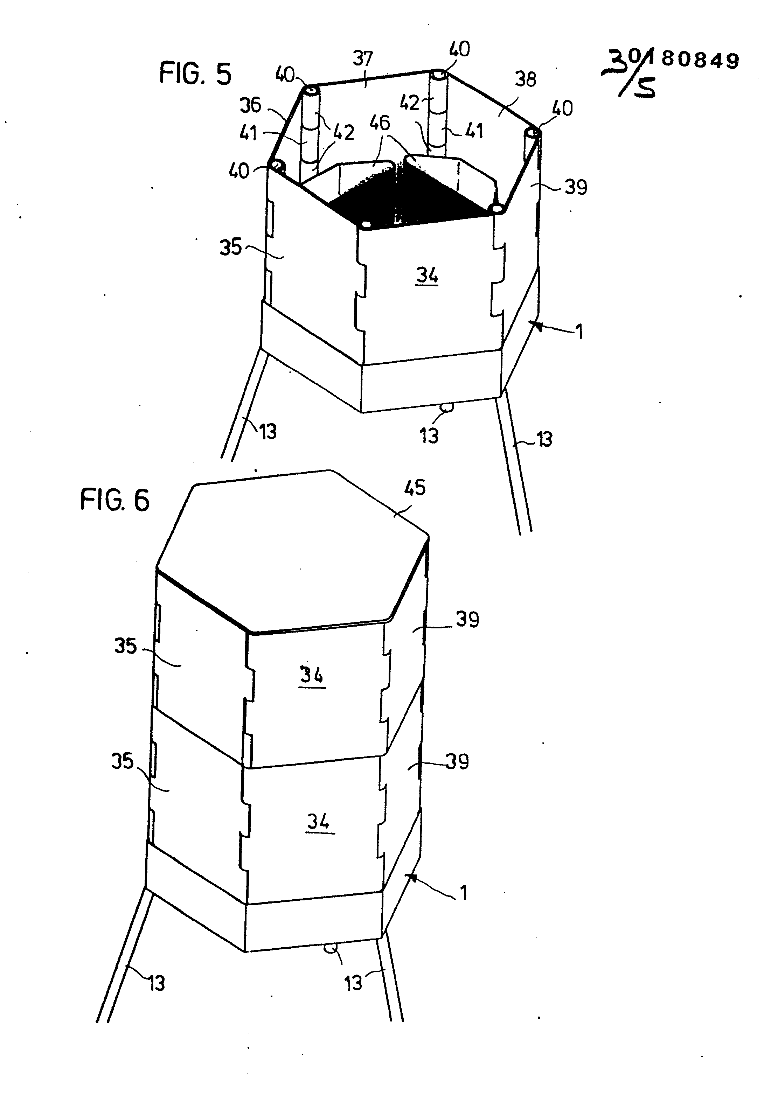

Zum Aufsetzen auf die Seitenwände 3 bis einschließlich 8 des
Feuerkastens 1 sind Windschutzwände 34, 35, 36, 37, 38 und 39 vorgesehen, deren Seitenlänge jeweils der Länge einer Seitenwand
4 bis 8 entspricht und die durch wenigstens teilweise trennbare
Scharniere 40 jeweils paarweise miteinander verbunden sind.
Diese Scharniere 40 bestehen jeweils aus ineinandergreifenden
Ringösen 41 bzw. 42 in welchen, zur gelenkigen Verbindung
jeweils zweier Windschutzwände ein Scharnierstab in Form eines
Rohres 43 oder eines Rundstabes 44 als kuppelndes Element
eingesetzt ist und dessen unteres Ende als Steckzapfen in eine
der Steckösen 10 einsteckbar ist. (Siehe Fig. 9) Auf diese Weise
lassen sich die einzelnen Windschutzwände 34 bis 39 einfach
zusammenfügen und auch wieder einfach voneinander trennen
bzw. einzeln oder zu mehreren gemeinsam auf die Seitenwände
3 bis 8 des Feuerkastens 1 aufsetzen, derart, daß sie beispielsweise
gem. der Fig. 4, 5 und 7 einen seitlich ringsum geschlossenen,
oben offenen, bzw. einen oben und auch über zwei Seitenwänden
des Feuerkastens 1 offenen, bzw. einen oben mittels eines sechseckigen Deckels 45 geschlossenen, seitlich jedoch über zwei
Seitenwänden des Feuerkastens offenen Windchutzkasten bilden.
Eine weitere Möglichkeit ist in Fig. 6 dargestellt. Dort sind
jeweils sechs Windschutzwände in doppelter Anordnung aufeinandergesetzt, und mit einem Deckel 45 abgedeckt, so daß sie über
dem Feuerkasten 1 einen geschlossenen Turm bilden, der beispielsweise zum Heißräuchern irgendwelcher Speisen, z.B. von Wurst,
Fleisch od. dgl. benutzt werden kann. Es besteht dabei auch
die Möglichkeit, eine oder zwei der Windschutzwände 34 bis
39 wie eine Tür zu öffnen und zu schließen. In der in Fig.
4 dargestellten oben offenen, ringsum jedoch geschlossenen Anordnung der Windschutzwände bilden sie einen Schacht, in dem beispielseise das Grillen am Spieß vorzüglich durchgeführt werden kann. Dazu kann zwar grundsätzlich die im Feuerkasten liegende Glut verwendet werden. Besser jedoch eignen sich zum Grillen am drehend angetriebenen Spieß Glutkörbe 46 die, wie aus den Fig. 5 und 8 erkennbar ist, eine im wesentlichen trapezartige Querschnittsform aufweisen und in Vertikallage in beliebiger Anordnung auf den Boden 2 des Feuerkastens 1 gestellt werden können. Bei diesen Glutkörben ist jeweils nur die auf der Grundseite des Trapezquerschnittes angeordnete Wand 47 als Lochwand oder als Gitterwand ausgebildet, während die anderen Wände 48, 49 und 50 aus geschlossenen oder nur mit sehr wenigen Öffnungen versehenen Blechwänden bestehen. Diese Glutkörbe lassen sich auf der Bodenfläche des Feuerkastens 1 beliebig verschieben, so daß ihre Hitzeinwirkung auf das Grillgut in Grenzen regulierbar ist. Die in der Zeichnung nicht sichtbaren Böden der Glutkörbe 46 sind zweckmäßigerweise etwa 10 cm über der Standfläche angeordnet.

Zur höhenverstellbaren Aufnahme einer Haltevorrichtung für den Grillrost 51, sind die beiden sich gegenüberliegenden Windschutzwände 35 und 38 (siehe Fig. 4) jeweils mit vertikalen Schlitzen 52 versehen, die jeweils mehrere stufenweise angeordnete seitliche Schlitzösen 53 aufweisen und in welche jeweils ein Horizontalschlitz 54 mündet. Die beiden Horizontalschlitze 54 dienen zum Einführen eines Grillstabes, der länger ist als der Abstand der beiden Windschutzwände 35 und 38 und der jeweils in eine der Stützösen 53 eingehängt werden soll. Die Haltevorrichtung für den Grillrost 51 besteht aus zwei völlig gleich geformten, sich spiegelbildlich gegenüberliegend an den Innenseiten der Windschutzwände 35 und 38 angeordneten, trapezförmigen Blechplatten 55, die zwei seitliche Stützfinger 56 und an der Unterkante eine Winkelleiste 57 aufweisen, auf welcher die Rahmenschiene 58 des Grillrostes 51 lose aufliegt. Im oberen mittleren Bereich ist die Blechplatte 55 mit zwei Steckbohrungen 59 versehen, deren vertikaler Abstand den vertikalen Abständen der Schlitzösen 53 entspricht. In diesen Bohrungen 59 stecken unter Federspannung die beiden Federschenkel 60 und 61 einer Ringfeder 62, deren Ringöse 63 außerhalb der Windschutzwand 35 bzw. 38 sitzend angeordnet ist. Die beiden Federschenkel 60 und 61 dienen somit als Tragzapfen für die Blechplatten 55, die mittels der Schlitzösen 53 in unterschiedlichen Höhen über dem Boden 2 des Feuerkastens 1 bzw. über der darauf liegenden Glut fixiert werden können.

Eine weitere sehr vorteilhafte Einrichtung der erfindungsgemäßen Grillvorrichtung ist in den Fig. 15 bis 17 dargestellt. Es handelt sich dabei um die Glutbegrenzer 64, 65 und 66, die jeweils völlig gleich gestaltet sind und die sowohl in Dreierkombination, wie in Fig. 15 dargestellt ist, als auch zu zweit, wie in den Fig. 16 und 17 dargestellt ist, vorteilhaft zum gehäuften Zusammenhalten der Grillkohle bzw. der Grillglut benutzt werden können. Diese Glutbegrenzer bestehen jeweils aus zwei zusammenhängenden, länglichen Wandelementen 67 und 68 die zueinander einen Winkel $\beta$ von beispielsweise 120° miteinander bilden und die beide gegenüber der Vertikalen um einen Winkel $\delta$ von ca. 30° nach außen geneigt sind. An den unteren horizontalen Kanten 72, 73 dieser Wandelemente 67 und 68 sind jeweils Standfüße 69, 70 und 71 angeordnet, deren Höhe wenigstens 0,5 cm beträgt und die demnach dafür sorgen, daß die Unterkanten 72 bzw. 73 der Wandelemente 67 und 68 vom Boden 2 des Feuerkastens 1 einen entsprechenden Vertikalabstand aufweisen, damit genügend Luft durch die so entstehenden Schlitzöffnungen zirkulieren kann.

In Fig. 15 sind die drei Glutbegrenzer 64, 65 und 66 in einer Formation angeordnet, die der Sechseckform des Glutkastens 6 entspricht und die in der Regel dann angewendet wird, wenn eine großflächige Glut benötigt wird. In den Fig. 16 und 17 hingegen, sind die beiden längeren Wandelemente 67 nur zweier Glutbegrenzer 63 und 64 in geringerem Abstand voneinander und parallel zueinander verlaufend so angeordnet, daß sie einen krippenartigen Hohlraum 75 zwischen sich einschließen, in welchen eine geringe Menge von Holzkohle 74 eingelegt werden kann, ohne daß diese auf den Boden 2 des Feuerkastens 1 fällt. Diese Anordnung zweier Glutbegrenzer eignet sich vorzüglich zum Anzünden der gem. Fig. 14 im krippenartigen Hohlraum 75 angehäuften Holzkohle 74 in dem beispielsweise ein mit einer leicht entflammbaren Flüssigkeit getränkter sog. Zündkörper daruntergelegt und angezündet wird. Wenn dann die Holzkohle 74 genügend entzündet ist, so daß sie selbst weiterbrennen kann, können die beiden Glutbegrenzer weiter auseinander gerückt werden. Durch die winkelartige Anordnung der beiden miteinander verbundenen Wandelemente 67 und 68 und die Anordnung der Füße 69, 70 und 71 an den Enden der Unterkanten 72 und 73 haben diese Glutbegrenzer auch eine genügende Standfestigkeit, so daß ohne weiteres der Grillrost 51 unmittelbar auf sie aufgelegt werden kann, wie das beispielseise in Fig. 1 der Fall ist.

Es ist aus den Fig. 15 und 16 ersichtlich, daß die Wandelemente 67 und 68 der Glutbegrenzer 63, 64 und 65 jeweils ungleich lang sind, weil sich dadurch mehr Formationsmöglichkeiten ergeben als bei gleich langen Wandelementen. Bei dem gezeichneten Ausführungsbeispiel sind die Wandelemente 67 im Mittel etwa um das 1,4-fache länger als die Wandelemente 68.

0180849

G 136/EP

Anmelder: Peter Gehrke, D-7742 St. Georgen-Brigach
Bundesrepublik Deutschland

Patentansprüche

1. Transportable Grillvorrichtung, bestehend aus einem eine sechseckige Grundrißform und sechs Seitenwände gleicher Höhe aufweisenden Feuerkasten aus Stahlblech mit wenigstens drei abnehmbaren Standbeinen, mit abnehmbaren Windschutzwänden, mit einem Grillrost, der höhenverstellbar über dem Boden des Feuerkastens in eine Halteeinrichtung einhängbar ist, sowie mit wenigstens einem in den Feuerkasten einsetzbaren Glutkorb und mit wenigstens einem um eine vertikale Achse schwenkbaren Topfhalter, **dadurch gekennzeichnet,** daß in den Ecken der Seitenwände (3 bis 8) des Feuerkastens (1) jeweils nach innen gebogene Ösenbleche (9) angeordnet sind, welche mit den Eckabschnitten der Seitenwände (3 bis 8) oben und unten offene, im Boden (2) des Feuerkastens (1) freigesparte Steckösen (10) mit einem wenigstens annähernd rhombischen Querschnitt

- 2 -

bilden, in welche von der Unterseite des Feuerkastens (1) formschlüssig rhombische Steckzapfen (16) der Standbeine (13) und in welche von oben entweder Steckzapfen (43, 44) von Windschutzwänden (34 bis 39) oder weitere Standbeine (13) zur Bildung einer galgenartigen Kessel- oder Rostaufhängevorrichtung, oder Topfhalter (24) einsteckbar sind.

2. Grillvorrichtung nach Anspruch 1, dadurch gekennzeichnet, daß die Standbeine (13) jeweils aus geraden Metallrohren- oder stäben (14) bestehen, die an einem Ende einen um einen Winkel ($\alpha$) von etwa 30° abgebogenen Steckzapfen (16) aufweisen, dessen Querschnitt dem rhombischen Querschnitt der Steckösen (10) angepaßt ist.

3. Grillvorrichtung nach Anspruch 2, dadurch gekennzeichnet, daß die Standbeine (13) auch an den den Steckzapfen (16) gegenüberliegenden Enden abgewinkelte Fußabschnitte (17) aufweisen, welche zu den Steckzapfen (16) achsparallel verlaufen.

4. Grillvorrichtung nach Anspruch 1, dadurch gekennzeichnet, daß die Windschutzwände (34 bis 39) jeweils die gleiche Länge aufweisen wie die Seitenwände (3 bis 8) des Feuerkastens (1) und daß die Windschutzwände (34 bis 39) jeweils paarweise scharnierartig miteinander verbunden sind, wobei die Steckzapfen der Windschutzwände (34 bis 39) zugleich Teile der Scharnierdorne (43 bzw. 44) sind.

5. Grillvorrichtung nach Anspruch 4, dadurch gekennzeichnet, daß die Scharnierdorne (43, 44) lose in die Ringösen (41, 42) der Windschtzwände (34 bis 39) eisteckbar sind.

6. Grillvorrichtung nach Anspruch 1 oder 2, dadurch gekennzeichnet, daß die Ösenbleche (9) jeweils mit angeschnittenen, sickenartig in den Ösenquerschnitt einwärts geprägten, parallel zur Längsachse (12) des rhombischen Ösenquerschnitt verlaufenden Stützabschnitten (28) versehen sind.

7. Grillvorrichtung nach Anspruch 6, dadurch gekennzeichnet, daß die Topfhalter (24), die aus rechtwinklig gebogenen Rundstäben oder -rohren bestehen und an einem Stab- oder Rohrschenkel (26) einen Topfring (25) oder ein Stellkreuz aufweisen, am Endabschnitt eines in eine Steckӧse (10) des Feuerkastens (1) steckbaren abgewinkelten Schenkels (27) mit einer Querschnittsabflachung (30) versehen sind, welche der durch die Stützabschnitte (28) erzeugten Querschnittsverringerung angepaßt ist.

8. Grillvorrichtung nach Anspruch 1, dadurch gekennzeichnet, daß die Glutkörbe (46) eine im wesentlichen trapezartige Querschnittsform aufweisen und daß die Grundseite (47) der Trapezform aus einem Lochblech oder einem Gitter besteht, während die übrigen Seitenwandabschnitte (48, 49,
50) geschlossene Flächen bilden, bzw. nur wenige kleine
Öffnungen aufweisen und daß die Glutkörbe (46) im Feuerkasten
frei an beliebiger Stelle aufstellbar sind.

9. Grillvorrichtung nach Anspruch 1, dadurch gekennzeichnet,
daß die Windschutzwände (34 bis 39) mittels eines Deckels
(45) abdeckbar sind und so die Grillvorrichtung als allseits geschlossene Räucherkammer verwendbar ist.

10. Grillvorrichtung nach Anspruch 1, dadurch gekennzeichnet,
daß auf dem Boden (2) des Feuerkastens (1) wenigstens
zwei im wesentlichen gleich gestaltete Glutbegrenzer (63,
64, 65) beliebig stellbar angeordnet sind, die jeweils
aus zwei zusammenhängenden, länglichen Wandelementen
(67, 68) mit parallelen Längskanten bestehen, welche miteinander einen Winkel ( $\beta$ ) von 90° - 120° bilden, die
beide gegenüber der Vertikalen um einen Winkel ( $\delta$ )
von 20° - 30° nach außen geneigt sind und die an ihren
äußeren Enden und in der Nähe ihres gemeinsamen Scheitels
jeweils Standfüße (69, 70, 71) von wenigstens 0,5 cm Höhe
aufweisen.

11. Grillvorrichtung nach Anspruch 10, dadurch gekennzeichnet,
daß die beiden Wandelemente (67, 68) eines Glutbegrenzers

- 5 -

0180849

etwa im Verhältnis 1,2 : 1 bis 2 : 1 ungleich lang sind.

12. Grillvorrichtung nach Anspruch 1, dadurch gekennzeichnet, daß zwei sich diametral gegenüberliegende Windschutzwände (35 und 38) jeweils mit einem vertikalen Schlitz (52) versehen sind, der in abgestuften Höhen mehrere seitliche Schlitzösen (53) zur Aufnahme von horizontalen Steckbolzen oder Tragzapfen (60, 61) zweier Grillrosthalteplatten (55) aufweist und daß wenigstens eine dieser Windschutzwände (35, 38) zusätzlich mit einem in den vertikalen Schlitz (52) mündenden Horizontalschlitz (54) versehen ist.

1/0180849

FIG. 1

FIG. 2

0180849

FIG. 3

FIG. 4

FIG. 5

FIG. 6

0180849

FIG.7

FIG.8

FIG.9

FIG.11

FIG.10

FIG.12

C180849

FIG.14

FIG.13

FIG.15

FIG.16

FIG.17

## EUROPÄISCHER RECHERCHENBERICHT

Europäisches
Patentamt

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | DE-A-2 949 085 (HONSEL-WERKE AG) * Seiten 6,7; Figuren 1,2,5 * | 1 | A 47 J 37/07 |
| A | US-A-2 994 316 (BRENDER) * Spalte 2, Zeilen 58-64; Figuren 1,2 * | 2 | |
| A,P | FR-A-2 546 051 (ROUSSEAU) * Figuren 1-4 * | 4,5 | |
| A | US-A-2 900 897 (FISHER) * Figuren 2,5; Spalte 2, Zeilen 61-69 * | 1 | |
| A | CH-A- 469 475 (BONDANINI) * Figuren 2,5,6; Spalte 3, Zeilen 25-40 * | 1 | RECHERCHIERTE SACHGEBIETE (Int. Cl.4) |
| A | US-A-2 740 395 (GOODWIN) * Figur 1 * | 10 | A 47 J |
| A | US-A-3 119 387 (BELLER) * Figures 1-3 * | 12 | |
| D,A | DE-A-2 415 575 (TRIPPNER) | | |
| D,A | DE-A-2 612 230 (KIRSCHNER) | | |

Der vorliegende Recherchenbericht wurde für alle Patentansprüche erstellt.

| Recherchenort DEN HAAG | Abschlußdatum der Recherche 04-02-1986 | Prüfer SCHARTZ J. |
|---|---|---|